# DEMANDE DE BREVET EUROPEEN

(11) **EP 1 008 511 A1**
(43) Date de publication de la demande: **14.06.2000**
(21) Numéro de dépôt: 99490043.9
(22) Date de dépôt: 07.12.1999
(51) Int. Cl.: B62K 21/26, B62K 21/12

(54) **Bicyclette a poignees profilees**

(30) Priorité: 11.12.1998 FR 9815952
(71) Demandeur: DECATHLON, 59650 Villeneuve d'Ascq (FR)
(72) Inventeur: Salom, Olivier, 34640 Puisserguiers (FR); Roger, Benoît, 59000 Lille (FR)
(74) Mandataire: Hénnion, Jean-Claude

(57) **Abrégé**

La bicyclette de l'invention comprend un guidon (1) formé d'une tige (2) dont les extrémités libres (3) supportent des poignées (4) de guidage. La tige (2), au niveau de chaque poignée, a une double inclinaison, telle que les directions des deux poignées sont convergentes en avant et au-dessus de la bicyclette, à savoir : a. une première inclinaison d'angle α, de l'ordre de 10°, par rapport à un plan longitudinal (LL') de la bicyclette, cet angle α étant mesuré par projection dans un plan horizontal,
b. une seconde inclinaison d'angle β, compris entre 30 et 50° par rapport à un plan horizontal, cet angle β étant mesuré par projection dans un plan longitudinal (LL') de la bicyclette ; de plus, chaque poignée (4) comporte deux portions saillantes d'appui (5,6), une première portion inférieure (5) pour l'appui de l'éminence hypothénar et une seconde portion latérale interne (6) pour l'appui de l'éminence thénar et d'au moins la partie du pouce qui lui est adjacente.

## Description

La présente invention concerne une bicyclette dont le guidon et plus particulièrement les poignées sont conçus pour apporter un maximum de confort à l'utilisateur.

On a déjà proposé par le document W093/00251 de constituer une poignée notamment mais non exclusivement pour bicyclette à partir d'une substance déformable, se présentant sous la forme d'un élément plan sur une face et avec des rayures longitudinales sur l'autre. On applique la main pour déformer la substance puis on effectue un traitement thermique en sorte d'obtenir que le matériau soit conforme à l'empreinte de la main dans sa préhension de l'objet, notamment du guidon de bicyclette.

On comprend que le but recherché est d'avoir une poignée de préhension qui soit adaptée à la morphologie de l'utilisateur, ce qui devrait lui apporter le maximum de confort lors de l'utilisation dudit objet.

Cependant, cette solution, particulièrement onéreuse, ne permet pas d'équiper de manière standard des objets, notamment des guidons de bicyclette proposés à une large gamme d'individus de morphologie différente.

Le but que s'est fixé le demandeur est de proposer une bicyclette dont le guidon est équipé de poignées qui pallient l'inconvénient précité tout en apportant à l'utilisateur un confort optimal et qui de plus minimise les efforts musculaires lors de l'utilisation.

Ce but est parfaitement atteint par une bicyclette qui de manière connue comprend un guidon formé d'une tige dont les extrémités libres supportent des poignées de guidage.

De manière caractéristique selon l'invention ladite tige, au niveau de chaque poignée, a une double inclinaison, telle que les directions des deux poignées sont convergentes en avant et au-dessus de la bicyclette :
a. une première inclinaison d'angle α, de l'ordre de 10°, par rapport à un plan longitudinal de la bicyclette, cet angle α étant mesuré par projection dans un plan horizontal, la bicyclette étant en position debout.
b. une seconde inclinaison d'angle β, compris entre 30 et 50° par rapport à un plan horizontal, la bicyclette étant en position debout, cet angle β étant mesuré par projection dans un plan longitudinal de la bicyclette ; de plus chaque poignée comporte deux portions saillantes d'appui, une première portion inférieure pour l'appui de l'éminence hypothénar et une seconde portion latérale interne pour l'appui de l'éminence thénar et d'au moins une partie du pouce.

Pour une construction symétrique du guidon, les angles α des deux poignées sont de même valeur mais de sens opposé. Par contre, s'agissant de la seconde inclinaison, les angles β des deux poignées sont de même valeur et de même sens.

C'est la combinaison de cette inclinaison particulière et des deux portions saillantes d'appui de chaque poignée qui permet d'obtenir une position de préhension des poignées qui soit particulièrement confortable et qui demande le minimum d'efforts musculaires.

De préférence la seconde portion saillante latérale interne a son extrémité supérieure qui est recourbée vers l'avant en sorte que le pouce soit légèrement fléchi lorsqu'il est en appui sur ladite extrémité.

De plus, avantageusement, l'arrière de la seconde portion saillante latérale interne est en creux en sorte que les extrémités de l'index, du médius, de l'annulaire et de l'auriculaire puissent s'y appliquer sans contact avec le pouce. Du fait de cette forme en creux de la face arrière, le pouce et l'index sont proches l'un de l'autre, ce qui donne à l'utilisateur une meilleure sensation de préhension de la poignée.

De préférence, la première zone saillante inférieure est relevée sur une distance de l'ordre de 2 à 3 centimètres, formant un angle de l'ordre de 60° à 70° par rapport à la direction générale de l'extrémité correspondante de la tige.

Dans un mode préféré de réalisation, la tige du guidon a une partie centrale rectiligne de part et d'autre de la potence et deux parties latérales recourbées dont les extrémités libres, supportant les poignées, sont dirigées en oblique vers le bas et vers l'extérieur, selon la double inclinaison d'angles α et β.

La présente invention sera mieux comprise à la lecture de la description qui va être faite d'un exemple préféré de réalisation d'une bicyclette dont le guidon comporte des poignées à double inclinaison et à portions saillantes d'appui, illustré par le dessin annexé dans lequel :
La figure 1 est une représentation schématique partielle d'un premier exemple de bicyclette avec le guidon et une partie de la potence, vus du côté gauche,
La figure 2 est une vue interne de côté de la poignée droite,
La figure 3 est une vue de face de la poignée droite,
La figure 4 est une vue de dessus de la poignée droite,
La figure 5 est une vue schématique d'une main, et
La figure 6 est une vue en perspective d'un second exemple de bicyclette.

La configuration particulières de la bicyclette de l'invention est le résultat des recherches menées par le demandeur pour améliorer le confort de l'utilisateur dans la tenue du guidon. Il a notamment constaté qu'il y avait une tendance naturelle de se saisir de chaque poignée en contractant les muscles de la main, ce qui peut entraîner, après un certain temps d'utilisation, une certaine fatigue.

De manière conventionnelle, la bicyclette de l'invention, comporte un guidon 1 formé d'une tige notamment métallique dont chacune des deux extrémités libres 3 supporte des poignées de guidage 4, qui sont des pièces tubulaires globalement cylindriques emmanchées à force dans lesdites extrémités.

Dans le présent texte, on dénomme par "plan longitudinal" de la bicyclette un plan vertical (lorsque la bicyclette est debout) et dont la direction générale est celle de déplacement de la bicyclette en ligne directe, qui globalement est celle du cadre.

De manière caractéristique, chaque extrémité 3 de tige, au niveau de la poignée 4 a une double inclinaison, la première d'angle α et la seconde d'angle β, de sorte que les directions générales desdites poignées sont convergentes avec le point de convergence en avant et au-dessus de la bicyclette, dans le plan médian de la bicyclette.

La première inclinaison d'angle α est prise par rapport à un plan longitudinal LL' de la bicyclette, et est mesuré par projection dans un plan horizontal, la bicyclette étant en position debout. L'angle α est de l'ordre de 10°, de même valeur mais de sens opposé pour chacune des poignées droite et gauche.

La seconde inclinaison d'angle β est prise par rapport à un plan horizontal, la bicyclette étant en position debout ; il est mesuré par projection dans un plan longitudinal de la bicyclette. L'angle β est compris entre 30 et 50°, de même valeur et de même sens pour chacune des poignées droite et gauche.

De plus, de manière caractéristique, chaque poignée 4 comporte deux portions saillantes d'appui 5,6, une première portion inférieure 5 et une seconde portion latérale interne 6. La première portion 5 est destinée à l'appui de l'éminence hypothénar 8, c'est à dire de la saillie qui se trouve à la partie interne de la paume 9 de la main et qui est formée par les trois muscles courts moteurs de l'auriculaire 10. La seconde portion 6 est destinée à l'appui de l'éminence thénar il et d'au moins la partie 12a du pouce 12 qui lui est adjacente. L'éminence thénar 11 est la partie en saillie du côté externe de la paume de la main.

Dans sa recherche du moindre effort musculaire, le demandeur a constaté que c'est cette combinaison de la double inclinaison α et β et des deux parties saillantes 5,6 précitées qui permet d'avoir la main dans un état de relaxation maximale lorsqu'elle se saisit de la poignée 4.

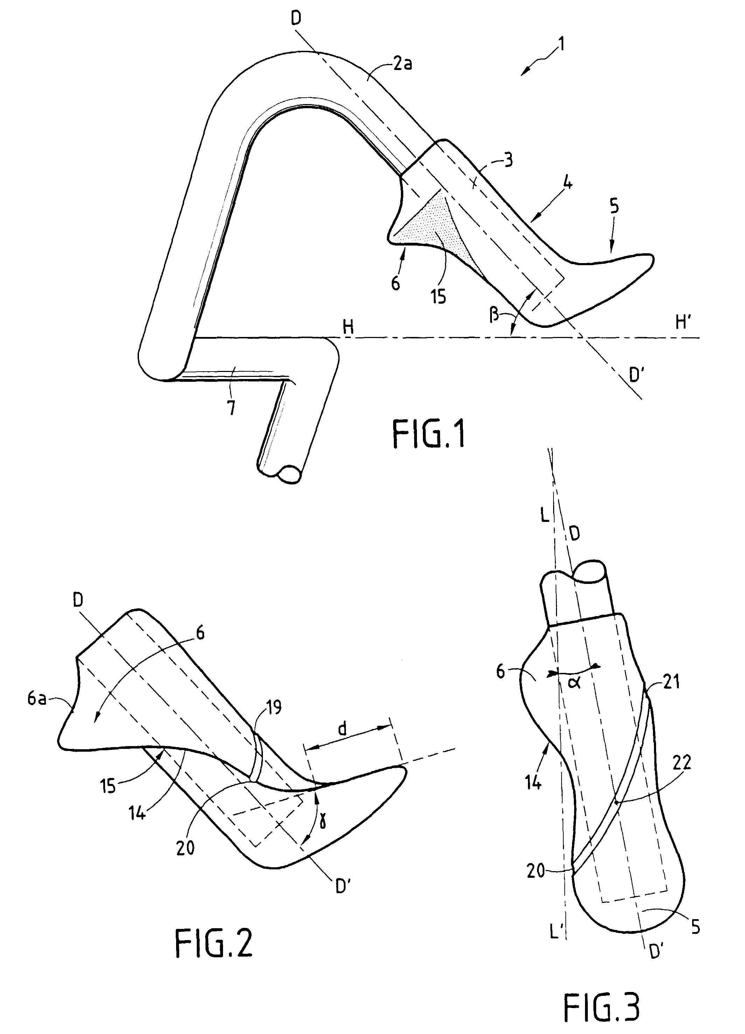

Dans l'exemple illustré à la figure 1, la tige 2 du guidon comporte une partie centrale rectiligne (non visible), de part et d'autre de la potence 7 et deux parties latérales recourbées 2a, dont le rayon de courbure est tel que les extrémités libres 3, supportant les poignées 4, sont dirigées en oblique vers le bas et vers l'extérieur de la bicyclette, de manière à respecter les angles d'inclinaison α et β.

Dans ce mode de réalisation, le guidon 1 est terminé par les premières portions saillantes 5 des deux poignées 4. L'angle β est de 45°. Cette valeur a été retenue comme optimale pour un vélo de ville, c'est à dire un vélo où le confort est primordial et la vitesse secondaire.

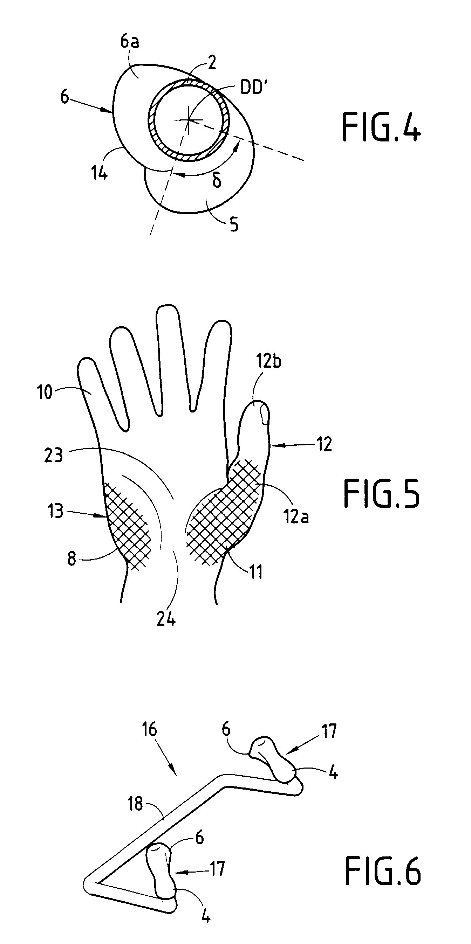

Ce mode de réalisation n'est cependant pas exclusif de l'invention, puisqu'il est possible de concevoir un second exemple de guidon 16 dont les extrémités 17 de la tige 18 supportant les poignées 4, sont dirigées en oblique vers le haut et vers l'intérieur comme illustré à la figure 6. Dans ce cas, le guidon 16 est terminé par les secondes portions saillantes 6, plus précisément les zones d'appui 6a des pouces 12.

La poignée 4 est de préférence obtenue par moulage à partir d'une matière plastique semi-rigide.

Dans le premier exemple illustré aux figures 2 à 4, la poignée 4 qui comporte un évidement intérieur, est emmanchée dans l'extrémité cylindrique 3 de la tige 2 ; cette poignée 4 est asymétrique par rapport à l'axe DD' de cette tige 2, avec ses deux portions saillantes 5, 6 qui constituent des faces d'appui pour des emplacements précis de la main de l'utilisateur.

La première portion saillante 5 se trouve en partie basse de la poignée 4, destinée à servir d'appui de l'éminence hypothénar 8. Cette portion saillante 5 est relevée sur une distance d de l'ordre de 2 à 3 centimètres d'un angle γ de l'ordre de 60 à 70° par rapport à l'axe DD' de l'extrémité 3 de la tige 2 (figure 2). Cette portion saillante 5 occupe une portion angulaire δ de l'ordre de 45° (figure 4) ; elle constitue un appui efficace pour l'éminence hypothénar 8 et la tranche 13 de la paume remontant vers l'auriculaire 10.

La seconde portion saillante 6 se trouve située latéralement sur la poignée 4, du côté interne c'est à dire dirigée vers la potence 7. Elle est destinée à servir d'appui à l'éminence thénar 11 et au moins à la partie 12a du pouce 12 qui est adjacente à l'éminence thénar.

On a représenté sur la figure 5, en hachuré, les zones de la paume de la main qui reposent sur les deux portions saillantes 5, 6 de la poignée 4.

De préférence, comme illustré à la figure 2, la seconde portion latérale interne 6 a son extrémité supérieure 6a qui est recourbée en sorte que l'extrémité 12b du pouce 12 peut s'y appuyer alors qu'il est légèrement fléchi.

On comprend qu'il n'y a pas, dans l'exemple illustré, de rupture entre la première portion saillante 5 inférieure et la seconde portion saillante 6 latérale interne et son extrémité recourbée 6a. En fait il y a une continuité, la seconde portion latérale 6 prolongeant sur le côté interne de la poignée la première portion inférieure 5, bordée par une arête continue 14. Cette arête 14 constitue le bord des deux portions saillantes sur lesquels prend appui la paume de la main. Elle délimite également la face inférieure desdites portions saillantes. Avantageusement la face inférieure 15 de la seconde partie saillante latérale interne 6 est creusée en sorte que lorsque la main est refermée sur la poignée 4, les quatre doigts opposés au pouce viennent s'appliquer sur cette face inférieure 15 sans aucun contact avec le pouce 12 proprement dit, l'arête 14 venant en surplomb au-dessus de ces quatre doigts.

La configuration tridimensionnelle particulière de la poignée apparaît à l'examen des figures 2 à 4, notamment la courbure de la surface d'appui de la seconde portion saillante 6 et de son extrémité 6a qui permet de conserver la pliure naturelle du métacarpe du pouce et qui, avec la forme en creux de la face arrière, augmente la proprioception de serrage entre le pouce et l'index.

Dans la configuration précitée, le repos palmaire est maximal grâce à l'appui de la tranche de la main sur la portion saillante inférieure 5, grâce à l'appui du pouce dans l'alignement radius/cubitus sur la portion saillante latérale 6, incluant son extrémité supérieure 6a recourbée, et grâce au fait qu'il n'y a pas de compression de la paume de la main au niveau du canal carpien 24. Le double appui de la tranche 13 de la main et du pouce 12 induit une configuration légèrement en creux de la paume au niveau dudit canal carpien 24, ce qui empêche toute compression des nerfs passant par cette zone et évite les désagréments correspondants notamment les fourmillements. Eventuellement pour garantir cette non-compression, il peut être prévu dans la poignée 4 une rainure 19 en hélice partant d'une zone 20 de l'arête 14 au-dessus de la portion saillante inférieure 5 et remontant vers une zone 21 située en haut de la partie externe de la poignée 4.

L'écartement entre les deux poignées devrait en théorie être fonction de la largeur d'épaule de l'utilisateur pour obtenir une position optimale. En pratique, il a été retenu qu'un écartement de l'ordre de 490 mm était adéquat pour une grande partie de la population, tant masculine que féminine ; cet écartement entre la poignée droite et la poignée gauche est mesuré à partir du centre 22 de la poignée 4, correspondant sensiblement à la zone 23 centrale de la paume de la main.

## Revendications

1. Bicyclette comprenant un guidon (1) formé d'une tige (2) dont les extrémités libres (3) supportent des poignées (4) de guidage, caractérisée en ce que la tige (2), au niveau de chaque poignée, a une double inclinaison, telle que les directions des deux poignées sont convergentes en avant et au-dessus de la bicyclette, à savoir :
a. une première inclinaison d'angle α, de l'ordre de 10°, par rapport à un plan longitudinal (LL') de la bicyclette, cet angle α étant mesuré par projection dans un plan horizontal,
b. une seconde inclinaison d'angle β, compris entre 30 et 50° par rapport à un plan horizontal, cet angle β étant mesuré par projection dans un plan longitudinal (LL') de la bicyclette ;
en ce que chaque poignée (4) comporte deux portions saillantes d'appui (5,6), une première portion inférieure (5) pour l'appui de l'éminence hypothénar (8) et une seconde portion latérale interne (6) pour l'appui de l'éminence thénar (11) et d'au moins la partie (12a) du pouce qui lui est adjacente.

2. Bicyclette selon la revendication 1 caractérisée en ce que la seconde portion saillante latérale interne (6) a son extrémité supérieure (6a) qui est recourbée vers l'avant.

3. Bicyclette selon l'une de revendications 1 ou 2 caractérisée en ce que l'arrière (15) de la seconde portion saillante latérale interne (6) est en creux en sorte que les extrémités de l'index, du médius, de l'annulaire et de l'auriculaire puissent s'y appliquer sans contact avec le pouce.

4. Bicyclette selon l'une des revendications 1 à 3 caractérisée en ce que la première zone saillante inférieure (5) est relevée sur une distance de l'ordre de 2 à 3 centimètres, formant un angle (γ) de l'ordre de 60° à 70° par rapport à la direction générale (DD') de l'extrémité (3) correspondante de la tige (2).

5. Bicyclette selon l'une des revendications 1 à 4 caractérisée en ce que la première portion saillante (5) occupe une portion angulaire (δ) de l'ordre de 45° par rapport à l'axe (DD') de l'extrémité correspondante de la tige (2).

6. Bicyclette selon la revendication 1 caractérisée en ce que la poignée droite (4) a la configuration illustrée aux figures 2 à 4 et la poignée gauche une configuration qui lui est symétrique par rapport à un plan longitudinal (LL') de la bicyclette.

7. Bicyclette selon l'une des revendications 1 à 6 caractérisée en ce que l'écartement entre les deux poignées, droite/gauche, mesuré depuis le point central (22) de chaque poignée, est de l'ordre de 490 mm.

8. Bicyclette selon l'une des revendications 1 à 7 caractérisée en ce que chaque poignée (4) comporte une rainure (19) partant d'une zone (20) de l'arête (14) interne au-dessus de la portion saillante inférieure (5) et remontant en hélice vers une zone (21) située en haut de la partie externe de la poignée (4).

9. Bicyclette selon l'une des revendications 1 à 8 caractérisée en ce que la tige (2) du guidon (1) a une partie centrale rectiligne de part et d'autre de la potence (7) et deux parties latérales recourbées (2a) dont les extrémités libres (3), supportant les poignées (4), sont dirigées en oblique vers le bas et vers l'extérieur, selon la double inclinaison d'angles α et β.
